# EUROPEAN PATENT APPLICATION

(11) **EP 2 863 479 A1**
(43) Date of publication of application: **22.04.2015**
(21) Application number: 13803961.5
(22) Date of filing: 13.05.2013
(51) Int. Cl.: H01Q 1/52, B60C 23/04, H01Q 1/32, H01Q 9/16

(54) **STATE DETECTION DEVICE**

(30) Priority: 13.06.2012 JP 2012133431
(71) Applicant: The Yokohama Rubber Co., Ltd., Minato-ku Tokyo 105-8685 (JP)
(72) Inventor: NAKATANI Koji, Hiratsuka-shi Kanagawa 254-0047 (JP)
(74) Representative: Dilg, Haeusler, Schindelmann Patentanwaltsgesellschaft mbH
(86) International application number: PCT/JP2013/063268
(87) International publication number: WO 2013/187163

(57) **Abstract**

To provide a condition detection device that can widen a frequency band of an antenna more than a conventional example so a transmission and reception frequency is in the frequency band of the antenna even if a resonant frequency of the antenna shifts somewhat.[Resolution Means] A first printed wiring substrate 351 on which a detection and transceiver circuit 400, which detects and transmits a predetermined physical quantity of a tire, and printed wiring 351a for an antenna are formed and a second printed wiring substrate 352 on which printed wiring 352a for the antenna is formed are disposed so as to oppose each other, and a planar conductor plate 361 is provided by being fixed, so as to be positioned between an antenna 450 and a metal face to which mounting takes place, on the second printed wiring substrate 352 of a device main body 300 in which the antenna 450 is formed by conductively connecting the printed wirings 351a, 352a for the antenna in a coil shape by a columnar connection conductor 354.

## Description

The present invention relates to a condition detection device and more particularly relates to a condition detection device that transmits a detection result by a radio wave to the outside and is used by being mounted on a metal face such as a rim in a tire.

### BACKGROUND

Systems that monitor air pressure in a tire are generally a tire condition detection device provided with a radio device and mounted to a rim well portion in the tire, wherein the radio device transmits air data (for example, see Patent Document 1). An antenna provided to the tire condition detection device is affected by a metal portion of a rim or the like coming close thereto, and characteristics thereof often change greatly; thus, an antenna design is needed for a condition where the tire condition detection device is disposed to the metal of the rim or the like. However, rim shapes are various; in particular, if a distance between the antenna and the metal configuring the rim differs according to the shape of the rim, both a resonant frequency and an impedance of the antenna greatly change.

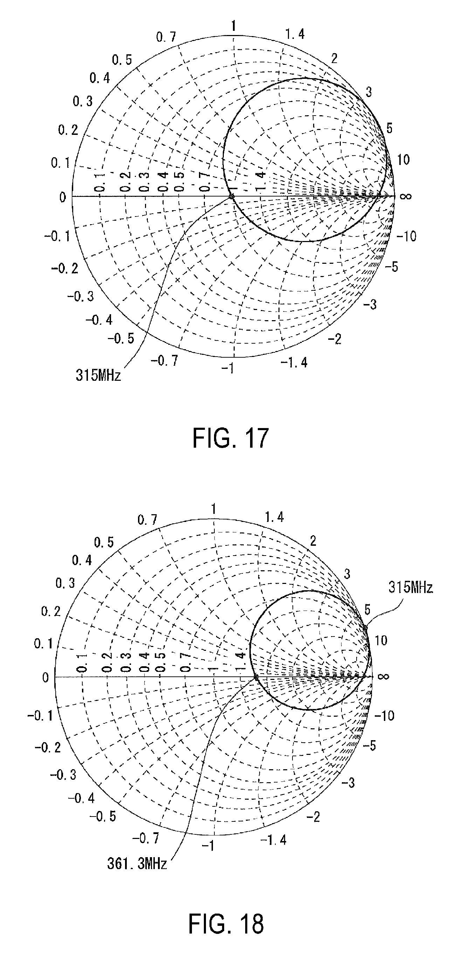

For example, if a tire condition detection device provided with a transmission unit whose transmission frequency is 315 MHz and an antenna whose resonant frequency is 315 MHz is mounted to the rim in an optimal condition, favorable impedance characteristics are obtained as illustrated in FIG. 17. However, if this tire condition detection device is separated slightly from the rim or mounted to a rim of another shape, the resonant frequency of the antenna frequently shifts significantly as illustrated in FIG. 18.

That is, if the shape or the like of the rim to which the tire condition detection device is mounted differs, the resonant frequency of the antenna frequently shifts significantly; therefore, to retain favorable antenna characteristics, antenna design needs to be performed one by one for each shape of the rim.

Because there is a need to make an antenna provided with optimal characteristics for each shape of the rim in this manner, there are problems where manufacturing costs per unit increase and mass production is difficult.

Because of this, the present inventor, with an object of providing a tire condition detection device that can obtain favorable antenna characteristics even if a shape of a rim to which mounting will take place changes, can reduce manufacturing costs, and can be mass produced, devised the tire condition detection device disclosed in Patent Publication No. 4868192 (Patent Document 2). As illustrated in FIGS. 19 to 23, this tire condition detection device 10 is provided with a sensor 410 that detects a predetermined physical condition of a tire; an antenna 450 that has a predetermined resonant frequency; a detection and transceiver circuit 400 that transmits information of a detection result of the sensor 410 as a radio wave from the antenna 450; and a case 130 that houses a device main body 30, in which the sensor 410, the antenna 450, the detection and transceiver circuit 400, and the like are formed, and through which the radio wave passes; wherein the tire condition detection device 10 is used by mounting the case 130 to a rim 4 in the tire. With this tire condition detection device 10, the device main body 30, which is configured from printed wiring substrates 351, 352 fixed to the case 130, is provided inside the case; the antenna 450 is provided by being fixed on one face side of the printed wiring substrate 351; and a planar conductor 361 is provided that is fixed in a condition of being electrically insulated from the antenna 450 in a position with a predetermined distance from the antenna 450 to form a boundary face between the antenna 450 and the rim 4 when the case 130 is mounted to the rim 4 and is set to a potential equivalent to a reference potential of the detection and transceiver circuit 400; wherein the planar conductor 361 is fixed to the printed wiring substrate 351 by a plurality of retaining members 371 so one face of the planar conductor 361 becomes parallel to another face of the printed wiring substrate 351 at a predetermined interval D therefrom and a predetermined space is formed between the another face of the printed wiring substrate 351 and one face of the planar conductor 361.

Furthermore, the antenna 450 is a coil-shaped antenna whose resonant frequency is set to a transmission and reception frequency of a transceiver unit and is formed by printed wiring provided on the printed wiring substrate 351, printed wiring provided on the printed wiring substrate 352, and a columnar connection conductor 354 that conductively connects the printed wiring of the printed wiring substrate 351 and the printed wiring of the printed wiring substrate 352 and fixes these printed wiring substrates 351, 352 to each other.

Furthermore, input and output terminals 441, 442 of the detection and transceiver circuit 400 provided to the printed wiring substrate 351 on which the detection and transceiver circuit 400 is formed and feeding points 451, 452 of the antenna 450 are connected by feeding conductors 461a, 461b, 461c, and 462.

In this manner, when the planar conductor 361 set to the reference potential of the detection circuit in the position of the predetermined distance D from the antenna 450 is provided in the device and the device is mounted to the rim 4, the planar conductor 361 becomes the boundary face between the antenna 450 and the rim 4; therefore, the effect of the metal configuring the rim 4 affecting the antenna 450 can be significantly reduced compared to the conventional art. Therefore, even if the shape of the rim 4 to which mounting takes place changes, favorable antenna characteristics can be obtained, the manufacturing costs can be reduced, and mass production becomes possible.

### PRIOR ART DOCUMENT

### Patent Document(s)

Patent Document 1: Japanese Unexamined Patent Application Publication No. 2006-327460A
Patent Document 2: Japanese Patent No. 4868192B

### SUMMARY OF THE INVENTION

### Problems to be Solved by the Invention

However, while performing research to improve the tire condition detection device above, the present inventor discovered that because the antenna 450 is an antenna of an extremely small size, a frequency bandwidth thereof becomes narrow, and therefore, if dimensions of the antenna 450 shift somewhat and the resonant frequency of the antenna 450 shifts, the transmission and reception frequency falls outside the frequency band of the antenna, a consistent condition between the transceiver unit and the antenna 450 worsens, and performance is reduced. In such a situation, the dimensions of the antenna need to be fine-tuned, but such fine-tuning is laborious.

The present invention is made to provide a condition detection device that can widen a frequency band of an antenna more than a conventional example so a transmission and reception frequency is in the frequency band of the antenna even if a resonant frequency of the antenna shifts somewhat.

### MEANS TO SOLVE THE PROBLEM

To achieve the object above, the present invention proposes a condition detection device used by mounting a case to a metal face, provided with: a sensor that detects a predetermined physical quantity of a surrounding area, a first printed wiring substrate and a second printed wiring substrate provided in planar opposition, a plurality of antenna printed wirings formed on the first printed wiring substrate and a plurality of antenna printed wirings formed on the second printed wiring substrate, a plurality of coupling conductors that forms a coil-shaped antenna having a predetermined resonant frequency by coupling the antenna printed wirings formed on the first printed wiring substrate and the antenna printed wirings formed on the second printed wiring substrate, a transmission circuit that is formed on the first printed wiring substrate and transmits information of the physical quantity detected by the sensor as a radio wave from the coil-shaped antenna, an output terminal of the transmission circuit provided on the first printed wiring substrate, a conductor that conductively connects a feeding point of the antenna and the output terminal, a case that houses the first printed wiring substrate and the second printed wiring substrate and through with the radio wave passes, and a planar conductor that is fixed in an electrically insulated condition from the antenna in a position a predetermined distance from the antenna to form a boundary face between the antenna and a metal face when the case is mounted to the metal face and that is set to a potential equivalent to a reference potential of the transmission circuit, wherein the planar conductor is fixed to the second printed wiring substrate by a plurality of retaining members so a face of the second printed wiring substrate and a face of the planar conductor are parallel with a predetermined interval therebetween and so a predetermined space is formed between the face of the second printed wiring substrate and the face of the planar conductor.

According to the condition detection device of the present invention, because the planar conductor set to the reference potential of the detection circuit is provided in the position the predetermined distance from the antenna in the device and the planar conductor becomes the boundary face between the antenna and the metal face when the device is mounted to the metal face, the effect of the metal face affecting the antenna can be significantly reduced compared to the conventional art.

### EFFECT OF THE INVENTION

According to the present invention, when mounting the condition detection device to the metal face, the case is fixed to the metal face so a bottom face of the case opposed the metal face. By the case being fixed to the metal face in this manner, the planar conductor set to the reference potential is disposed between the antenna and the metal face; therefore, when the condition detection device is mounted to the metal face, the planar conductor becomes the boundary face between the antenna and the metal face, thereby enabling the effect of the metal face affecting the antenna to be significantly reduced compared to the conventional art. Therefore, a need to make an antenna provided with optimal characteristics for each shape of the metal face such as the rim of the tire is eliminated, and the same antenna can be used in fixing to a metal face of any shape; therefore, manufacturing costs for one tire condition detection device can be significantly reduced compared to the conventional art and mass production of the tire condition detection device is easily enabled. Moreover, the frequency band of the antenna can be widened more than the conventional example so the transmission and reception frequency is in the frequency band of the antenna even if the resonant frequency of the antenna shifts somewhat.

### BRIEF DESCRIPTION OF THE DRAWING(S)

- FIG. 1: is a diagram illustrating a tire mounted with a tire condition detection device according to one embodiment of the present invention.
- FIG. 2: is a diagram illustrating a tire structure according to one embodiment of the present invention.
- FIG. 3: is an external perspective view illustrating the tire condition detection device according to one embodiment of the present invention.
- FIG. 4: is a plan view illustrating the tire condition detection device according to one embodiment of the present invention.
- FIG. 5: is a side cross-sectional view illustrating the tire condition detection device according to one embodiment of the present invention.
- FIG. 6: is an external perspective view illustrating a device main body according to one embodiment of the present invention.
- FIG. 7: is an external perspective view illustrating the device main body according to one embodiment of the present invention.
- FIG. 8: is an external perspective view illustrating a main portion of the device main body according to one embodiment of the present invention.
- FIG. 9: is a block diagram illustrating an electrical system circuit of the tire condition detection device according to one embodiment of the present invention.
- FIG. 10: is a diagram illustrating a positional relationship between a feeding conductor and a planar conductor plate according to one embodiment of the present invention.
- FIG. 11: is an external perspective view illustrating the planar conductor plate and retaining members according to one embodiment of the present invention.
- FIG. 12: is an external perspective view illustrating the retaining member according to one embodiment of the present invention.
- FIG. 13: is a diagram illustrating a relationship between a rim and the planar conductor plate when the tire condition detection device according to one embodiment of the present invention is mounted to the tire.
- FIG. 14: is a diagram illustrating a directivity of a transmission radio wave of the tire condition detection device according to one embodiment of the present invention.
- FIG. 15: is a diagram illustrating a Smith chart according to one embodiment of the present invention.
- FIG. 16: is a diagram illustrating a relationship between power efficiency and a VSWR regarding an input impedance according to one embodiment of the present invention.
- FIG. 17: is a Smith chart describing antenna characteristics in an appropriate condition according to a conventional example according to a conventional example.
- FIG. 18: is a Smith chart describing a fluctuation of the antenna characteristics according to a conventional example.

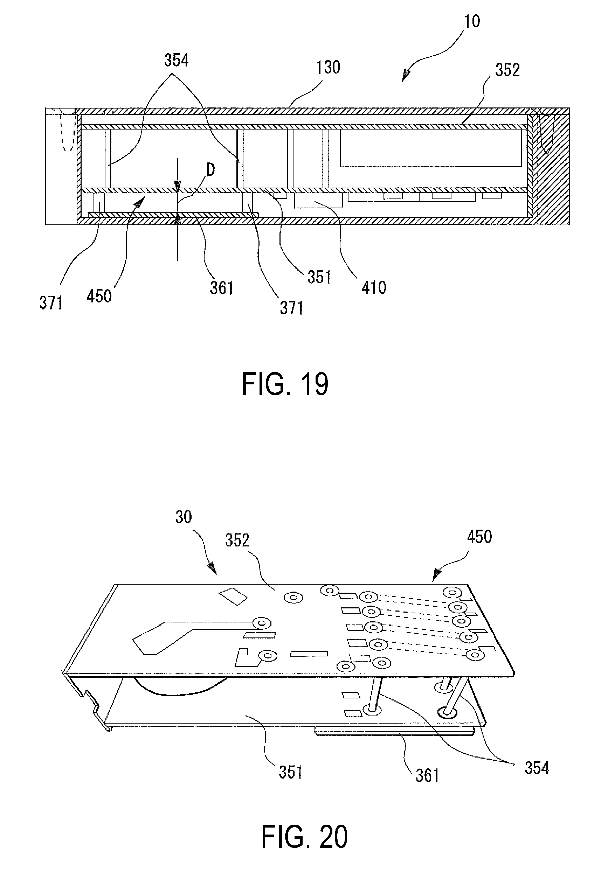

- FIG. 19: is a side cross-sectional view illustrating a tire condition detection device according to a conventional example.
- FIG. 20: is an external perspective view illustrating a device main body according to a conventional example.

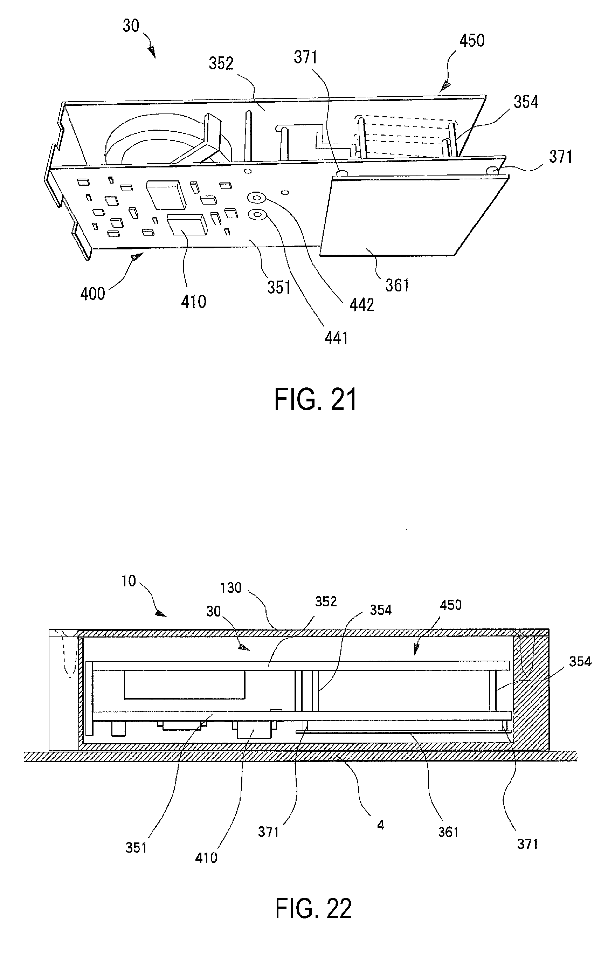

- FIG. 21: is an external perspective view illustrating the device main body according to a conventional example.
- FIG. 22: is a diagram illustrating a relationship between a rim and a planar conductor plate when the tire condition detection device according to a conventional example is mounted to a tire.

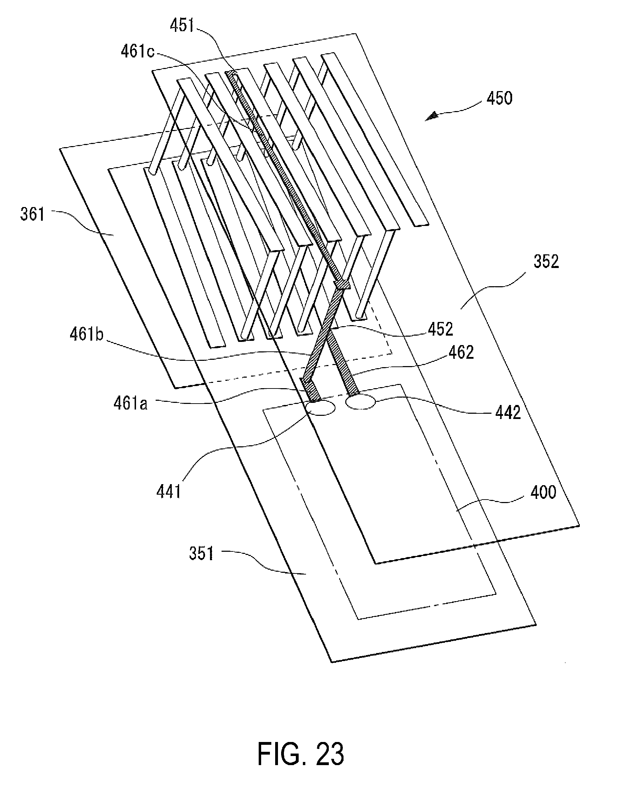

- FIG. 23: is a diagram illustrating a positional relationship between a feeding conductor and the planar conductor plate according to a conventional example.
- FIG. 24: is a diagram illustrating an example where a condition detection device of the present invention is applied to a pneumatic fender.

### BEST MODE FOR CARRYING OUT THE INVENTION

Hereinafter, an embodiment of the present invention is described with reference to the accompanying drawings.

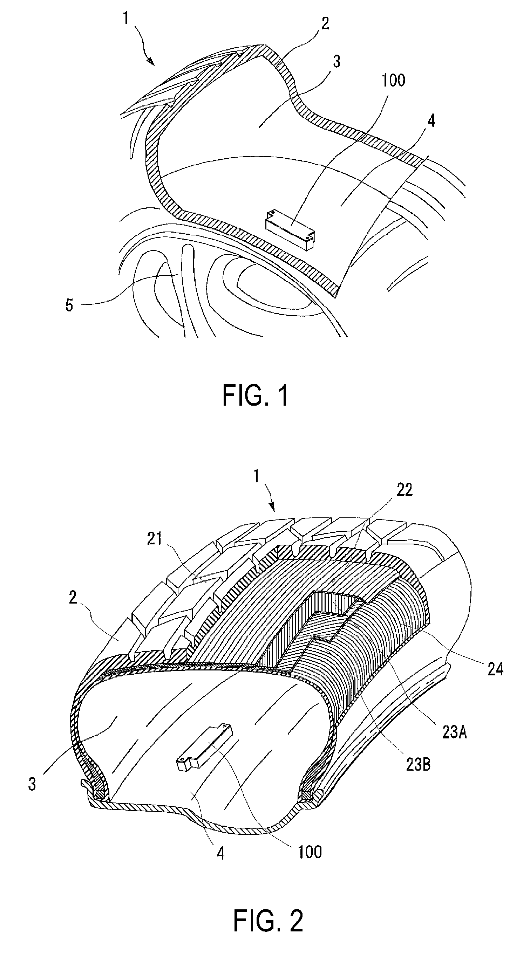

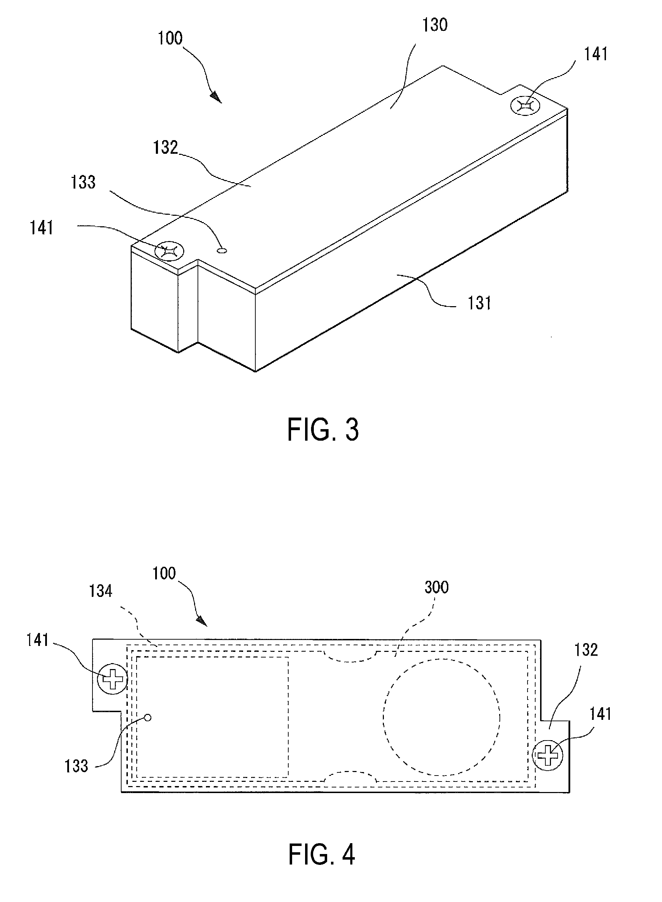

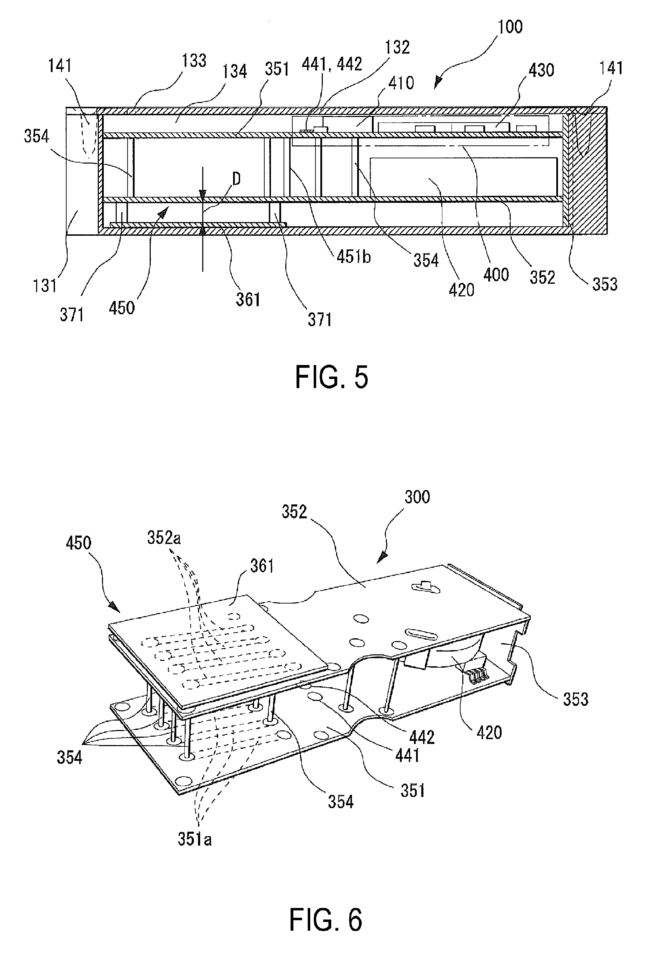

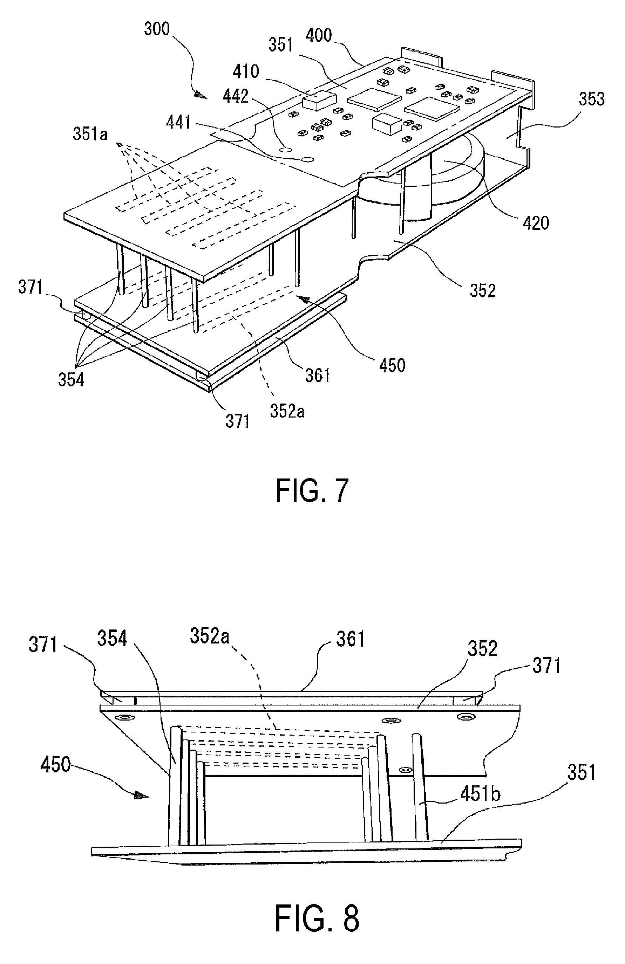

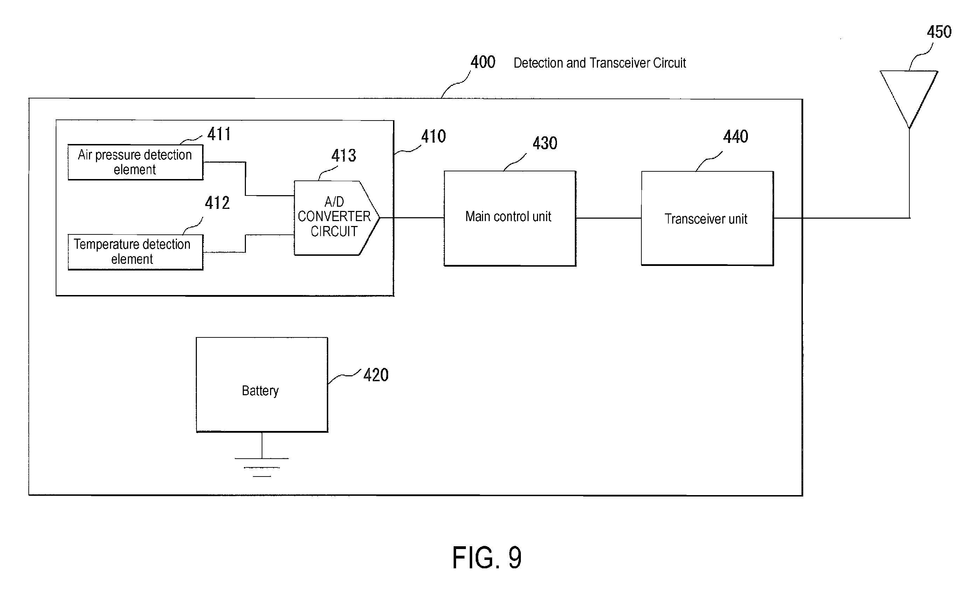

FIG. 1 is a diagram illustrating a tire mounted with a tire condition detection device according to one embodiment of the present invention, FIG. 2 is a diagram illustrating a tire structure according to one embodiment of the present invention, FIG. 3 is an external perspective view illustrating the tire condition detection device according to one embodiment of the present invention, FIG. 4 is a plan view illustrating the tire condition detection device according to one embodiment of the present invention, FIG. 5 is a side cross-sectional view illustrating the tire condition detection device according to one embodiment of the present invention, FIGS. 6 and 7 are external perspective views illustrating a device main body according to one embodiment of the present invention, FIG. 8 is an external perspective view illustrating a main portion of the device main body according to one embodiment of the present invention, and FIG. 9 is a block diagram illustrating an electrical system circuit of the tire condition detection device according to one embodiment of the present invention. In the diagrams, components that are the same as those of the conventional example will be represented with the same reference signs.

As illustrated in FIG. 1, a tire condition detection device 100 in the present embodiment is fixed in a predetermined position of a rim 4 inside an air chamber 3 of a tire 1; detects a pressure and a temperature in the air chamber 3 of a tire main body 2 by a sensor unit that is provided in this tire condition detection device 100 and is provided with a pressure detection element and a temperature detection element, which will be described below; and converts these detection results into digital values. Moreover, the tire condition detection device 100 generates and transmits digital information including these digital values. This digital information includes, other than the digital values of the detection results above, identification information specific to the tire condition detection device 100. Note that the tire 1 used in the present embodiment is a tire used with a heavy-duty truck or the like and is embedded with a steel carcass in the tire 1.

As illustrated in FIG. 2, the tire used in the present embodiment is normally used with large vehicles and is embedded with a belt made of steel and a carcass made of steel. The tire 1 is, for example, a well-known tubeless radial tire and includes a wheel and a rim in the present embodiment. In FIGS. 1 and 2, the tire 1 is configured from the tire main body 2, the rim 4, and the wheel 5, and the tire main body 2 is configured from a well-known cap tread 21; under tread 22; belts 23A, 23B; carcass 24; and the like.

As illustrated in FIGS. 3 to 5, a case 130 of the tire condition detection device 100 forms a substantially rectangular parallelepiped shape, has a projecting portion for screwing at both end portions in a longitudinal direction thereof, and is configured from a case main body 131 and a lid body 132. As illustrated in FIG. 5, a housing space 134 for housing a device main body 300 is formed inside the case main body 131, and an opening of the housing space 134 is closed by fixing the lid body 132 to the case main body 131 by a screw 141. Moreover, a ventilation hole 133 is formed in the lid body 132 allowing air to flow through to the housing space 134 from the outside via this ventilation hole 133 even in a condition where the lid body 132 is fixed to the case main body 131.

As illustrated in FIGS. 6 to 8, the device main body 300 is formed by disposing two printed wiring substrates 351, 352 that form a substantially rectangular shape in a parallel manner at a predetermined interval, and these printed wiring substrates 351, 352 are fixed to each other by a columnar connection conductor 354 that configures an antenna 450, a third printed wiring substrate 353 for coupling, and the like. The antenna 450 of a coil shape having a center axis that extends in a width direction of the first and second printed wiring substrates 351, 352 is formed on another end portion in a longitudinal direction of the device main body 300, and electronic components that configure an electronic circuit that includes the sensor unit 410 and a battery 420 are mounted on one end side. The printed wiring substrate 353 for coupling is soldered to each of the two printed wiring substrates 351, 352.

The first printed wiring substrate 351 and the second printed wiring substrate 352 are coupled by a plurality of columnar connection conductors 354 that is provided therebetween, that fixes one printed wiring substrate to another printed wiring substrate at a predetermined interval, and that conductively connects printed wiring of the one printed wiring substrate to printed wiring of the another printed wiring substrate.

A detection and transceiver circuit 400 illustrated in FIG. 9 is formed on the first printed wiring substrate 351 of the device main body 300. That is, the detection and transceiver circuit 400 is configured from the sensor unit 410, the battery 420, a main control unit 430, a transceiver unit 440, and the antenna 450.

The sensor unit 410 is mounted on a surface of the main body 300; is configured from an air pressure detection element 411, a temperature detection element 412, and an analog/digital conversion circuit 413; detects, for example, an air pressure and a temperature in the air chamber of the tire by the air pressure detection element 411 and the temperature detection element 412; and converts into digital values by the analog/digital conversion circuit 413 and outputs to the main control unit 430 these detection results.

The battery 420 is fixed to a surface of the second printed wiring substrate 352, is coupled to the device main body 300 by a connection conductor, and feeds power to the detection and transceiver circuit 400 formed on the first printed wiring substrate 351.

The main control unit 430 is configured from a well-known CPU, memory, and the like; accepts the detection results by the sensor unit 410 as the digital values, and generates and outputs to the transceiver unit 440 the digital information including these digital values. Note that this digital information includes, other than the digital values of the detection results above, identification information set in advance specific to the device main body 300 (written in advance in the memory or set by a DIP switch).

The transceiver unit 440 switches between transmission and reception based on indications from the main control unit 430; when transmitting, transmits the digital information input from the main control unit 430 by a radio wave of a predetermined frequency, for example, 315 MHz, from the antenna 450; when receiving, detects a digital signal from the radio wave of 315 MHz received via the antenna 450; and extracts and outputs to the main control unit 430 the digital information from the detected digital signal. Note that a transmission frequency and a reception frequency of the transceiver unit 440 are set to the same frequency. Moreover, input and output terminals 441, 442 connected to the antenna 450 of the transceiver unit 440 are formed on the first printed wiring substrate 351.

The antenna 450 is a coil-shaped antenna whose resonant frequency is set to the transmission and reception frequency of the transceiver unit 440 and is formed by the columnar connection conductors 354 that conductively connect printed wiring 351a provided on the first printed wiring substrate 351, printed wiring 352a provided on the second printed wiring substrate 352, the printed wiring of the first printed wiring substrate 351, and the printed wiring of the second printed wiring substrate 352 and fix these printed wiring substrates 351, 352 to each other.

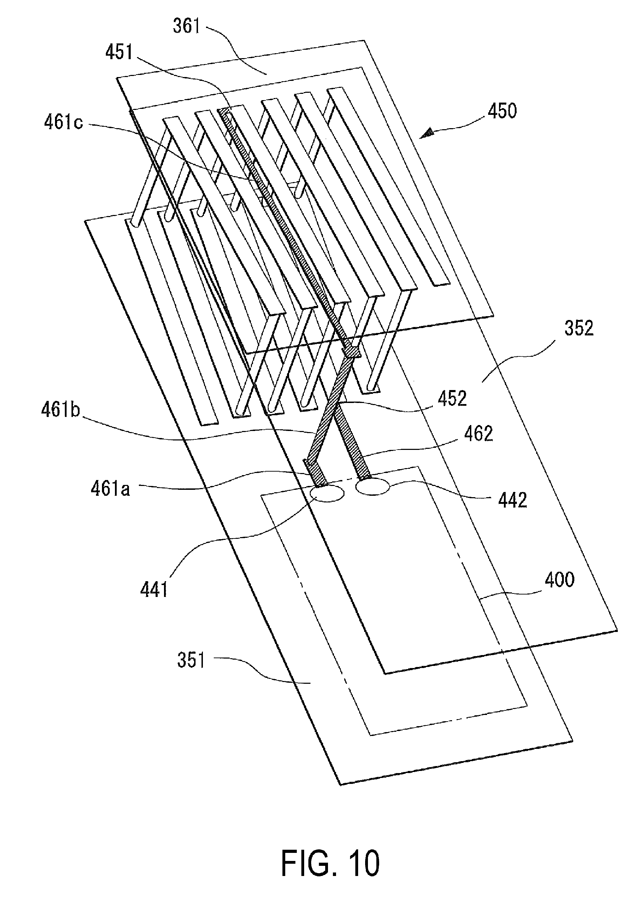

Furthermore, as illustrated in FIG. 10, the input and output terminals 441, 442 connected to the antenna 450 of the transceiver unit 440 formed on the first printed wiring substrate 351 and feeding points 451, 452 of the antenna 450 are conductively connected by feeding conductors 461a, 461b, 461c, and 462.

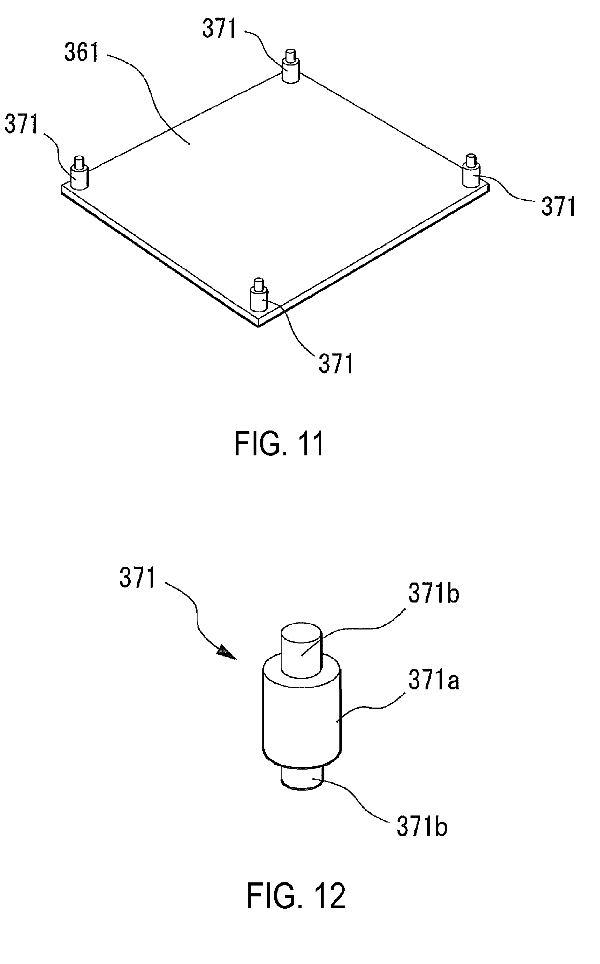

Furthermore, a planar conductor plate 361 forming a rectangular shape is fixed on another end portion outer face of the second printed wiring substrate 352 by four retaining members 371. The planar conductor plate 361 is provided in a position of the antenna 450 so as to be parallel to the printed wiring substrate 352 positioned on a bottom face side of the case main body 131 when the device main body 300 is housed in the case 130. The planar conductor plate 361 is fixed by the retaining members 371 so as to maintain a predetermined interval D with the second printed wiring substrate 352. This planar conductor plate 361 is set to a reference potential by being conductively connected to a predetermined conductor pattern (conductor pattern connected to an anode of the battery 420) of the second printed wiring substrate 352. Moreover, as illustrated in FIG. 11, the retaining members 371 are fixed to four corners of the planar conductor plate 361. As illustrated in FIG. 12, the retaining member 371 forms a shape where a projecting portion 371b of a cylindrical shape of a smaller diameter than a main body 371a is provided at both ends of the main body 371a of a cylindrical shape.

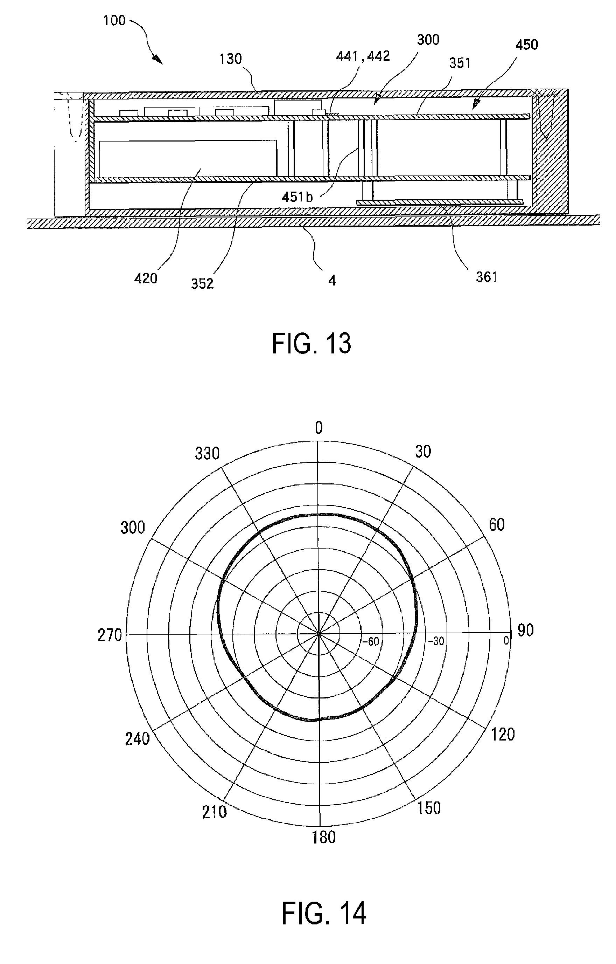

Furthermore, as illustrated in FIG. 13, the planar conductor plate 361 is disposed so as to form a boundary face between the antenna 450 and the rim 4 when the case 130 of the tire condition detection device 100 is mounted to the rim 4. A directivity of a transmission radio wave at this time becomes as illustrated in FIG. 14.

Furthermore, in the condition where the planar conductor plate 361 is mounted on the second printed wiring substrate 352, the antenna 450 has the resonant frequency of 325 MHz, and an antenna impedance at 315 MHz is 50 ohms. The interval D between the printed wiring substrate 352 and the planar conductor plate 361 at this time is set to 1.5 mm by the retaining members 371.

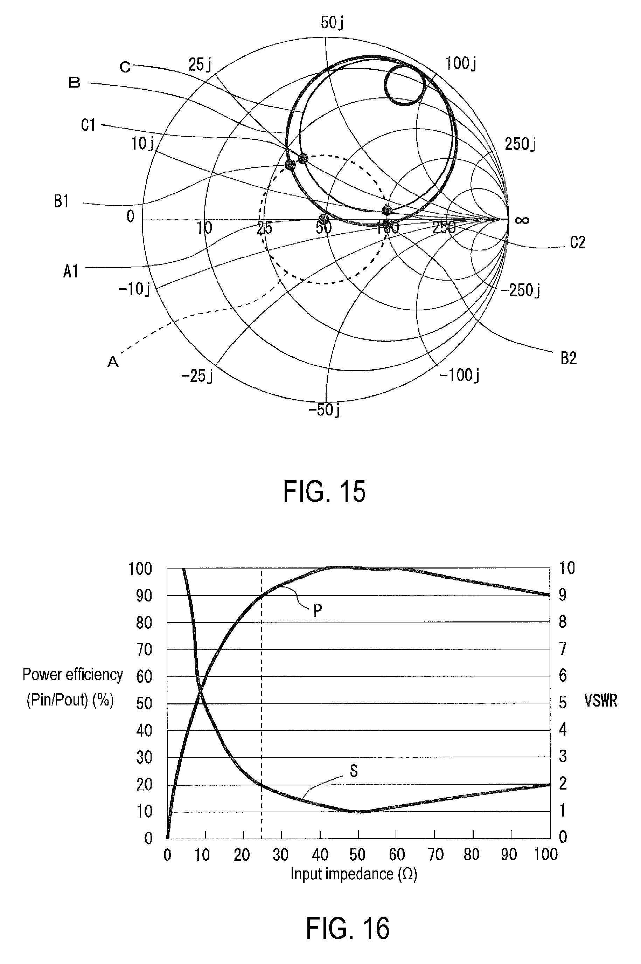

Impedance characteristics of the tire condition detection device 100 in the present embodiment are illustrated in FIG. 15, and characteristics of a power efficiency (Pin/Pout) and a VSWR regarding an input impedance of the antenna 450 are illustrated in FIG. 16.

In FIG. 15, a characteristic curve A represents an outer periphery of a range where an input impedance Z1 of the antenna 450 becomes such that 25 Ω < Z1 < 100 Ω. Moreover, a point A1 represents a point of a best impedance with the frequency of 315 MHz (Z0 = 50 + 0 [Ω]). Moreover, a characteristic curve B illustrates an impedance curve in the present embodiment and represents that the input impedance Z1 of the antenna 450 becomes such that 25 Ω< Z1 < 100 Ω between a frequency of 316 MHz at a point B1 and a frequency of 314.5 MHz at a point B2. Moreover, a characteristic curve C illustrates an impedance curve in the conventional example and represents that the input impedance Z1 of the antenna becomes such that 25 Ω < Z1 < 100 Ω between a frequency of 315.5 MHz at a point C1 and a frequency of 314.5 MHz at a point C2. Therefore, it is understood that in the present embodiment, a frequency band where the input impedance Z1 of the antenna 450 becomes such that 25 Ω < Z1 < 100 Ω is widened 0.5 MHz compared to the conventional example.

In FIG. 16, a curve P represents the power efficiency, and a curve S represents the VSWR; it is illustrated that when the input impedance Z1 of the antenna 450 is such that 25 Ω < Z1 < 100 Ω, the VSWR becomes 2 or less and a power efficiency of 90% or more can be obtained.

As above, according to the tire condition detection device 100 of the present embodiment, when mounting the tire condition detection device 100 to the rim 4, the case 130 is fixed to a surface of the rim 4 so a bottom face of the case 130 opposes the surface of the rim 4, and because the planar conductor plate 361 set to the reference potential is disposed between the antenna 450 and the surface of the rim 4 by fixing the case 130 to the rim 4 in this manner, when the tire condition detection device 100 is mounted to the rim 4, the planar conductor plate 361 becomes the boundary face between the antenna 450 and the rim 4; therefore, the effect of a metal configuring the rim 4 affecting the antenna 450 can be significantly reduced compared to the conventional art. Moreover, because the planar conductor plate 361 is fixed not to the first printed wiring substrate 351 on which the input and output terminals 441, 442 of the transceiver unit 440 connected to the feeding points 451, 452 of the antenna 450 are formed but to the second printed wiring substrate 352 opposing the first printed wiring substrate 351 and the planar conductor plate 361 is disposed away from the input and output terminals 441, 442 connected to the antenna 450 of the transceiver unit 440, the frequency band where the input impedance Z1 of the antenna 450 is such that 25 Ω< Z1 < 100 Ω increases 0.5 MHz compared to the conventional example. It is thought that a reason why the frequency band is widened compared to the conventional example in this manner is because a stray capacitance formed between the input and output terminals 441, 442 connected to the antenna 450 of the transceiver unit 440 and the planar conductor plate 361 is reduced by disposing the planar conductor plate 361 in a position away from the input and output terminals 441, 442 of the transceiver unit 440.

Therefore, because a need to make an antenna provided with optimal characteristics for each shape of the rim is eliminated and the same antenna can be used with rims of any shape, manufacturing costs of one tire condition detection device can be significantly reduced compared to the conventional art and mass production of the tire condition detection device is easily enabled. Moreover, because the frequency band where the input impedance Z1 of the antenna 450 that becomes such that 25 Ω< Z1 < 100 Ω is widened compared to the conventional example, a need to perform fine-tuning of the antenna is eliminated even if the resonant frequency of the antenna shifts somewhat.

Furthermore, in the above embodiment, the tire condition detection device 100 that can detect both the air pressure and the temperature in the tire is configured, but an information acquisition device that can detect either the air pressure or the temperature or another physical quantity may also be configured.

Furthermore, in the above embodiment, the condition detection device that has the rim in the tire as the metal face to which mounting takes place and detects physical quantities in the tire is configured, but it is needless to say that similar effects are exhibited even when a condition detection device that detects physical quantities of a surrounding area by being mounted to a metal face other than that of the tire is configured.

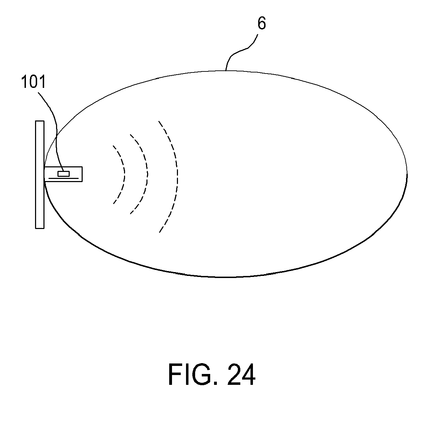

Furthermore, because the condition detection device of the present invention can reduce not only the effect from the rim of the tire but also from a surrounding casing to antenna characteristics, it can be diverted to other uses. For example, as illustrated in FIG. 24, with a pneumatic fender 6 used when a ship is berthed at or grappled to a quay or another ship as well, application can be to one that can detect an air pressure inside the pneumatic fender 6 with the pneumatic fender condition detection device 101, transmit a detection value thereof by a radio wave using the pneumatic fender condition detection device 101 to a remote location, and monitor the air pressure inside the pneumatic fender 6 without touching the pneumatic fender 6 by receiving this detection value.

### Industrial Applicability

The effect of the metal face affecting the antenna when the condition detection device is mounted to the metal face can be reduced, and the frequency band of the antenna can be widened so the transmission and reception frequency is in the frequency band of the antenna even if the resonant frequency of the antenna shifts somewhat.

### REFERENCE NUMBER

- 1: Tire
- 2: Tire main body
- 3: Air chamber
- 4: Rim
- 5: Wheel
- 100: Tire condition detection device
- 130: Case
- 131: Case main body
- 132: Lid body
- 133: Ventilation hole
- 134: Housing space
- 141: Screw
- 300: Device main body
- 351: First printed wiring substrate
- 351a: Printed wiring
- 352: Second printed wiring substrate
- 352a: Printed wiring
- 353: Third printed wiring substrate
- 354: Columnar connection conductor
- 361: Planar conductor plate
- 371: Retaining member
- 400: Detection and transceiver circuit
- 410: Sensor unit
- 411: Air pressure detection element
- 412: Temperature detection element
- 413: Analog/digital conversion circuit
- 420: Battery
- 421, 422: Connection conductor
- 430: Main control unit
- 440: Transceiver unit
- 441, 442: Input and output terminal
- 450: Antenna
- 451, 452: Feeding point
- 461a, 461b, 461c, 462: Feeding conductor

## Claims

1. A condition detection device used by mounting a case to a metal face, comprising:
a sensor detecting a predetermined physical quantity of a surrounding area;
a first printed wiring substrate and a second printed wiring substrate provided in planar opposition;
a plurality of antenna printed wirings formed on the first printed wiring substrate and a plurality of antenna printed wirings formed on the second printed wiring substrate;
a plurality of coupling conductors forming a coil-shaped antenna having a predetermined resonant frequency by coupling the antenna printed wirings formed on the first printed wiring substrate and the antenna printed wirings formed on the second printed wiring substrate;
a transmission circuit formed on the first printed wiring substrate and transmitting information of the physical quantity detected by the sensor as a radio wave from the coil-shaped antenna;
an output terminal of the transmission circuit provided on the first printed wiring substrate; a conductor conductively connecting a feeding point of the antenna and the output terminal;
a case housing the first printed wiring substrate and the second printed wiring substrate and through which the radio wave passes; and a planar conductor fixed in an electrically insulated condition from the antenna in a position a predetermined distance from the antenna to form a boundary face between the antenna and a metal face when the case is mounted to the metal face and being set to a potential equivalent to a reference potential of the transmission circuit; wherein
the planar conductor is fixed to the second printed wiring substrate by a plurality of retaining members so a face of the second printed wiring substrate and a face of the planar conductor are parallel with a predetermined interval therebetween and so a predetermined space is formed between the face of the second printed wiring substrate and the face of the planar conductor.

2. The condition detection device according to claim 1, wherein
an axis of the coil-shaped antenna is set parallel to the face of the planar conductor.

3. The condition detection device according to claim 1 or 2, wherein
in a relationship between a length L of an axis direction of the coil-shaped antenna and a wavelength λ of the transmission frequency of the transmission circuit, the length L is set so a value of L/λ is 0.25 or less.
